# EUROPEAN PATENT APPLICATION

(11) **EP 2 801 483 A1**
(43) Date of publication of application: **12.11.2014**
(21) Application number: 12864335.0
(22) Date of filing: 28.12.2012
(51) Int. Cl.: B60B 17/00, B61F 13/00

(54) **SOLID-ROLLED RAILWAY WHEEL**

(30) Priority: 03.01.2012 UA 2012000030 U
(71) Applicant: Open Joint Stock Company "Interpipe Nizhnedneprovsky Tube Rolling Plant", 49081 Dnipropetrovsk (UA)
(72) Inventor: POL'S'KYY, Georgiy Mykolaiovych, 49017 Dnipropetrovsk (UA); ZIGURA, Oleksandr Oleksandrovych, 49041 Dnipropetrovsk (UA); ROSLYK, Oleksandr Vadymovych, 49018 Dnipropetrovsk (UA)
(74) Representative: Flügel Preissner Kastel Schober
(86) International application number: PCT/UA2012/000119
(87) International publication number: WO 2013/103327

(57) **Abstract**

The invention relates to the field of manufacturing disk wheels for railway vehicles, which are in the form of a disk with an integral rim and are provided with rail-engaging elements. The solid-rolled railway wheel comprises a rim (1) with a flange (2) and a tread (3), a curved disk (4) having an undulatory S shape and being formed by the radii of curvature (arcs) of the radii (R₁) and (R₂), and a hub (5), wherein the place (6) where the curved disk (4) interfaces with the rim (1) and the place (7) where the curved disk (4) interfaces with the hub (5) are formed by the radii of curvature (arcs) of the radii (R₃, R₄) and (R₅, R₆), and a line (AB) represents the centre line of the radial section of the curved disk (4), wherein point (A) is situated at the place (6) where the curved disk (4) interfaces with the rim (1), and point (B) is situated at the place (7) where the curved disk (4) interfaces with the hub (5), and points (A) and (B) of the centre line (AB) of the curved disk (4) are situated on opposite sides of the median plane of the waves (O-O) which is perpendicular to the axis (X-X) of rotation, intersects the rim (1) at the tread (3) and intersects the centre line (AB) of the curved disk (4) at bend point (Y), wherein the first point (A) and the flange (2) of the rim (1) are situated on the same side of the median plane of the waves (0-0). According to the invention, the curved disk (4) is designed so that the relationship between the distance (H₂) from the second point (B) to the median plane of the waves (0-0) and the distance (H₁) from the first point (A) to the median plane of the waves (0-0) is 0.60-0.99, and the relationship between the radius (R₁) of the portion (AY) of the centre line (AB) of the curved disk (4) and the radius (R₂) of the portion (BY) of the centre line (AB) of the curved disk (4) is 1.01-1.67. The invention makes it possible to increase the service life of the proposed solid-rolled railway wheel, and also to reduce the wear rate of railway tracks.

## Description

### Technical field

This invention relates to the field of manufacturing disk wheels for railway vehicles which are in the form of a disk with an integral rim and provided with rail-engaging elements.

### Background of the invention

The growth of movement speeds of the railway vehicles leads to the increasing of the thermomechanical stresses on the wheels and the rails, especially in the braking process.

The solid - rolled railway wheel is exposed to the external stresses - both outward of the railway track and rolling stock as well as internal temperature stresses which appear while braking process.

The resulted factual stresses define greatly wheel resistance to damages and eventually determine the wheel service life.

The resulted factual stresses lead to the damage and destruction of the wheels and reduce the wheel service life.

The values of the total inner stresses as well as the character of stress distribution into the wheel volume especially strongly influence on the wheel service life.

The total stresses arise in the solid - rolled railway wheel in the result of the radial and axial dynamic stresses and in the result of the temperature stresses that are caused by friction between the braking shoes and a rim while braking process.

In case when the magnitudes of the total stresses are close to or more than fatigue life limit of the wheel material, fatigue cracks are formed in the wheel that may result, in turn, to premature fracture of the wheel.

In these conditions in the solid - rolled railway wheel the concentration of stresses caused by outward stresses and high temperatures are occurred and the total value of inner stresses may be higher than fluidity limit of the material of which the wheel is made.

In this case the residual deformations arise in the wheel which lead to the change of its operational properties and reducing the wheel service life.

The majority of cases of the wheel disk destruction are resulted with arising the significant fatigue stresses, thus the the fracture occurs in the place of a disk conjugation with a rim.

The choice of a rational structure of the solid - rolled railway wheel disk and the mutual arranging of its structure elements allows to reduce the total inner stresses and to distribute them optimally into the wheel volume.

Conventional solid - rolled railway wheel consists of a rim, a hub and a disk formed by inner and outward surfaces (RU 2085403 (RU), B60B3/02; 27.07.1997).

Outward and inner surfaces of the conventional solid - rolled railway wheel which form the wheel disk are designed straight linear and inclined to the wheel axis at 71 - 75 degrees.

These disadvantages are caused by high magnitudes of values of inner stresses at inner surface of the disk in the place of its conjugation with the rim.

The inner stresses arise at the outward surface of the disk in the place of its conjugation with the hub due to the combined actions of the significant temperature stresses caused by braking shoes friction along the wheel rim while braking process and of the side pressure on the wheel edge while rolling stock is passing curved sections of railway track.

The known solid - rolled railway wheel according to SU1139647 (A1) B60B17/00; 15.02.1985 comprises a rim, a hub and a disk which is formed by outward and inner curved surfaces.

In the known wheel the center line of the axial disk section in the place of its conjugation with the rim coincides in the axial direction with the center line of the axial disk section in the place of its conjugation with the hub.

The described above solid - rolled railway wheel structure allows to reduce the magnitudes of stresses in the place of the wheel disk conjugation with the rim.

These disadvantages are caused by high magnitudes of inner stresses at inner surface of the center wheel disk section resulted from outward stresses caused by heating while braking process or when rolling stock is passing the curved sections of the railway track that reduces the wheel service life.

Conventional solid - rolled railway wheel comprises a rim, a hub and a disk formed by the outward and inner curved surfaces (RU2259279 (C1) (RU), B60B3/02; 27.08.2005).

In the known wheel the shift of the center line of the axial disk section in the place of its conjugation with the rim in relation to the center line of the axial disk section in the place of its conjugation with the hub is within a range 10-25 mm.

The described above structure of solid - rolled railway wheel allows to reduce magnitudes of inner stresses at inner surface of the center part of the disk as well as to decrease the magnitude of axial wheel rim shift while heating during braking process or when rolling stock passes the curved sections of railway track.

A disadvantage of the known and described above wheel is uneven distribution of total inner stresses over the wheel volume.

This disadvantage is caused by high magnitude of curving in the center part of the wheel disk that results in the significant temperature stresses in the inner surface of the center part of the wheel disk that creates the conditions for the developing the fatigue cracks and reduces the wheel service life.

Conventional solid - rolled railway wheel comprises a rim, a hub and a disk formed by outward and inner curved surfaces (CZ8688 (U1) B60B3/00: B60B3/02; 25.05.1999).

In the known wheel the center line of an axial section of a disk has an undulatory S shape. It is located asymmetrically concerning of its bend point (Y). This point is shifted towards a rim. The center line of the axial section has a big curvature in close to rim part from the bend point.

Such accomplishment of a solid - rolled railway wheel allows to reduce the values of axial shifts of a rim of a wheel when heating in braking process but insufficiently describes a ratio between the curvature of close to rim and close to hub parts.

The lack of the known wheel is the considerable stresses in a wheel disk when heating in the braking process.

This lack is caused by the small area of convection and the big curvature of close to rim part of the disk of the wheel that creates the conditions for emergence of considerable thermal stresses in a disk when heating in the braking process and reduces the wheel service life.

Besides, because the relationship between the vertical distance of the second point (B) from the average plane (O) and vertical distance of the first point (A) from the average plane (O) is more than one, it involves a technical uncertainty of a choice of this relationship for achievement of the mentioned technical result.

The mentioned technical uncertainty of a choice of this relationship is that isn't known whether the specified technical result is reached in cases when this relationship is equal, for example, 0.5 or 1.5 or 5 or 10 or 50 that leads to the industrial application of the known solid - rolled railway wheel is impossible fully, and should be limited to the optimum range of values.

The closest on a technical essence and reached technical result a solid - rolled railway wheel comprising a rim with a flange and a tread, a curved disk having an undulatory S shape and being formed by the radii of curvature (arcs) of the radii (R₁) and (R₂) and a hub, wherein the place where the curved disk interfaces with the rim and the place where the curved disk interfaces with the hub are formed by the radii of curvature (arcs) of the radii (R₃, R₄) and (R₅, R₆) and a line (AB) represents the centre line of the radial section of the curved disk, wherein point (A) is situated at the place where the curved disk interfaces with the rim, and point (B) is situated at the place where the curved disk interfaces with the hub, and points (A) and (B) of the centre line (AB) of the curved disk (4) are situated on opposite sides of the median plane of the waves (O-O) which is perpendicular to the axis (X-X) of rotation, intersects the rim (1) at the tread (3) and intersects the center line (AB) of the curved disk (4) at bend point (Y), wherein the first point (A) and the flange (2) of the rim (1) are situated on the same side of the median plane of the waves (0-0), [«Bending resistant railway vehicle wheel of steel» (EP 0 798 136 B2 , of 01.10.1997; B60B17/00).

In the known wheel the centre line of the axial section of the disk has an undulatory S shape of a big curvature and is situated symmetrically concerning a bend point (Y).

Such accomplishment of a solid - rolled railway wheel allows to reduce a little the values of stresses while heating in the braking process.

A disadvantage of the known wheel is an intensive wear of the wheel rim caused by high magnitude of axial shifts of the wheel rim which arise from the static and dynamic stresses and also from the temperature stresses which arise at friction of brake shoes about a wheel rim in the braking process.

The specified disadvantages lead to reduction of the wheel service life.

### Summary of the invention

The object of this invention is the reduction the intensity of wear of the wheel rim, the increasing the wheel service life and the reduction the intensity of wear of the railway track.

This objective may be accomplished with a solid - rolled railway wheel comprising a rim with a flange and a tread, a curved disk having an undulatory S shape and being formed by the radii of curvature (arcs) of the radii (R₁) and (R₂) and a hub, wherein the place where the curved disk interfaces with the rim and the place where the curved disk interfaces with the hub are formed by the radii of curvature (arcs) of the radii (R₃, R₄) and (R₅, R₆) and a line (AB) represents the centre line of the radial section of the curved disk, wherein point (A) is situated at the place where the curved disk interfaces with the rim, and point (B) is situated at the place where the curved disk interfaces with the hub, and points (A) and (B) of the centre line (AB) of the curved disk are situated on opposite sides of the median plane of the waves (O-O) which is perpendicular to the axis (X-X) of rotation, intersects the rim at the tread and intersects the center line (AB) of the curved disk at bend point (Y), wherein the first point (A) and the flange of the rim are situated on the same side of the median plane of the waves (0-0), according to the invention the curved disk is designed so that relationship between the distance (H₂) from the second point (B) to the median plane of the waves (0-0) and the distance (H₁) from the first point (A) to the median plane of the waves (0-0) is 0.60-0.99, and the relationship between the radius (R₁) of the portion (AY) of the center line (AB) of the curved disk and the radius (R₂) of the portion (BY) of the center line (AB) of the curved disk is 1.01-1.67.

The solid - rolled railway wheel of such a form and geometrical parameters has the big area of convection due to small curvature of close to rim part of the disk, and the bend point (Y), of the center line (AB) of an axial section of a disk is shifted towards a hub.

As a result of it the optimum distribution of temperature stresses and total inner stresses from the static and dynamic axial and radial stresses into the wheel volume is reached.

Besides, the magnitude of axial cross shifts of a rim while the braking process reduces that provides the increasing of the wheel service life and also the reduction of intensity of wear of a railway track.

It is revealed by practical way that the increasing of the relationship of the distance (H2) to the distance (H₁) more than specified range (more than 0.99) leads to increasing of stresses in close to rim part of the disk from vertical (radial) power and thermal loadings in the braking process.

It is revealed by practical way that the reduction of the relationship of the radius (R1) to the radius (R2) less than specified range (less than 0.60) leads to big shifts of the close to rim part of a wheel disk in the axial direction that creates the preconditions for considerable axial shifts of a wheel rim while heating in the braking process.

As a result, the relationship of distance (H2) to distance (H1) in the range 0.60 - 0.99 is optimum.

The increasing of the relationship of the radius (R1) to the radius (R2) more than 1.67 leads to increasing of stresses in close to hub part of a disk.

The reduction of the relationship of the radius (R1) to the radius (R2) less than 1.01 leads to the shift of the bend point of the centre line of an axial section of a disk towards a rim and to the shift of the bend point of the centre line of the axial section of the disk to the rim direction. Thus, the area of convection reduces and the thermal stresses in the disk arise.

It testifies that the relationship of the radius (R1) to the radius (R2) 1.01-1.67 is optimum.

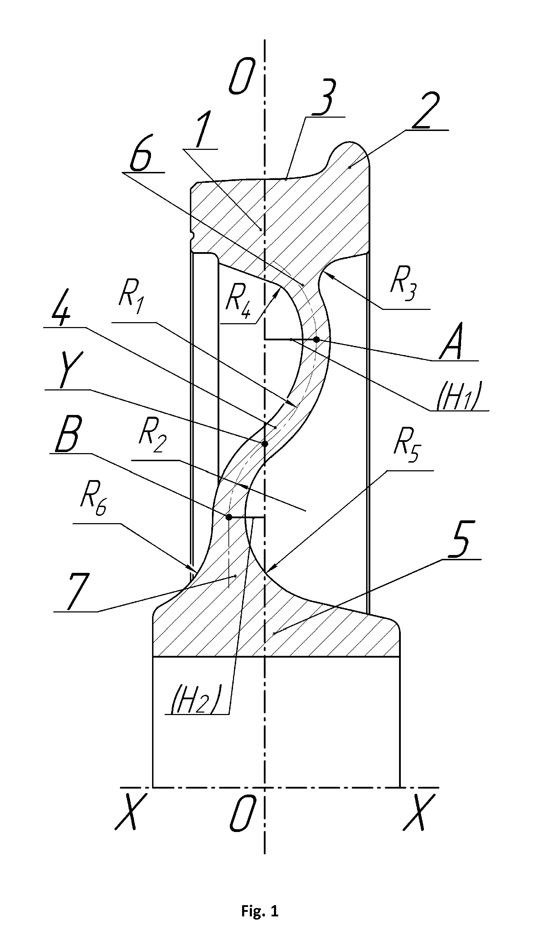

### Brief Description of the Drawing

In further the invention will be explained with the example of its embodiment with the references to the drawing.

### The best variant of the embodiment of invention

The solid - rolled railway wheel comprises a rim 1 with a flange 2 and a tread 3, a curved disk 4 having an undulatory S shape and being formed by the radii of curvature (arcs) of the radii R₁ and R₂ and a hub 5.

The place 6 where the curved disk 4 interfaces with the rim 1 and the place 7 where the curved disk 4 interfaces with the hub 5 are formed by the radii of curvature (arcs) of the radii R₃, R₄ and R₅, R₆.

line AB represents the centre line of the radial section of the curved disk 4.

The point A is situated at the place 6 where the curved disk 4 interfaces with the rim 1, and the point B is situated at the place 7 where the curved disk 4 interfaces with the hub 5.

The points A and B of the centre line AB of the curved disk 4 are situated on opposite sides of the median plane of the waves O-O.

The median plane of the waves 0-0 which is perpendicular to the axis X-X of rotation, intersects the rim 1 at the tread 3 and intersects the center line AB of the curved disk 4 at bend point Y,

The first point A and the flange 2 of the rim 1 are situated on the same side of the median plane of the waves 0-0.

The curved disk 4 is designed so that relationship between the distance (H₂) from the second point B to the median plane of the waves 0-0 and the distance H₁ from the first point A to the median plane of the waves 0-0 is 0.60-0.99, and the relationship between the radius R₁ of the portion AY of the center line AB of the curved disk 4 and the radius R₂ of the portion BY of the center line AB of the curved disk 4 is 1.01-1.67.

At the example of carrying out the solid - rolled railway wheel of steel ER7 of EN13262 the curved disk 4 is carried out of undulatory S shape with the parameters:
The distance H₁ from the first point A to the median plane of the waves 0-0 is H₁ = 38.82 mm;
The distance H₂ from the second point B to the median plane of the waves 0-0 is H₂ = 27.18 mm.

The relationship between the distance H₂ from the second point B to the median plane of the waves 0-0 and the distance H₁ from the first point A to the median plane of the waves 0-0 is H₂ : H₁ = 27.18 : 38.82 = 0.70 and is in the limits of the applied range 0.60 - 0.99.

The curved disk 4 having an undulatory S shape has the radius R₁ of the portion AY of the center line AB of the curved disk 4, R₁ = 100 mm.

The curved disk 4 having an undulatory S shape has the radius R₂ of the portion BY of the center line AB of the curved disk 4, R₂ = 70 mm.

The relationship of the radius R₁ of the portion AY of the center line AB of the curved disk 4 to the radius R₂ of the portion BY of the center line AB of the curved disk 4 is R₁ : R₂ = 100 : 70 = 1. 437 and is in the limits of the applied range 1.01-1.67.

The place 6 where the curved disk 4 interfaces with the hub 5 from the side of a flange 2 is formed by the arc R₃ = 20 mm.

The place 7 where the curved disk 4 interfaces with the rim 1 from the side opposite to the flange 2 is formed by the arc R₄ = 20 mm.

The place 6 where the curved disk 4 interfaces with the hub 5 from the side of the flange 2 is formed by the arc R₅ = 65 mm.

The place 7 where the curved disk 4 interfaces with the rim 1 from the side opposite to the flange 2 is formed by the radius of curvature (arc) R₆ = 70 mm.

Manufactured in this way solid - rolled railway wheel has the asymmetrical undulatory S shape disk.

Manufactured in this way disk provides the reduction the ruggedness of a wheel in the radial direction and the increasing the ruggedness in the axial direction.

Manufactured in this way construction of a wheel allows to increase its damping properties that increases the traffic safety of railway transport.

In the exploitation process a wheel disk bend in the axial direction is minimum, so the axial shifts of a wheel rim while heating in the braking process are minimum too, that allows to increase the term of the wheel service life and also to reduce the intensity of wear of the railway track.

Besides, the applied construction of a wheel provides as optimum distribution of the stresses on all the volume of a wheel, as allows to reduce the stresses in the most loaded zones and, thus, to reduce the possible wheel fatigue cracking that, in turn, increases an operational resource of a wheel.

The work of a solid - rolled railway wheel is carried out as follows.

At movement of a wheel on a rail, the stress from the vertical force operating in the plane of a circle of driving, is transmitted through a rim 1 to a curved disk 4 and to a hub.

At movement of a rolling stock on curved portions of a way and on railroad switches and crosses of the ways there is a stress from the lateral pressure of a flange 2 of the wheel rim 1 upon a rail which also is transferred to a wheel disk 4.

The maximum values of dynamic stresses which are perceived by a wheel of a rolling stock with an axle loading to 25 tf in use are twice higher than the value of the maximum static stress and, as a rule, don't exceed 306.5 kN for the vertical stress and 147.1 kN for the lateral stress.

The maximum value of total inner stresses in a wheel from the action of the stresses enclosed to it, shouldn't exceed a limit of fluidity of a material of which the solid - rolled railway wheel is made. This value makes 820 MPa.

In the applied construction of a solid - rolled railway wheel two stressed zones are allocated: place 6 where the disk 4 interfaces with the rim 1 and a place 7 where the disk 4 interfaces with the hub 5.

At movement of a wheel on direct portions of a way the vertical stress causes the greatest squeezing stresses on an inner surface of a disk 4 in the place 7 where the curved disk 4 interfaces with the hub 5 which reach the value 165.2 MPs, and the greatest stretching stresses on an outward surface of a disk 4 in the place 7 where the curved disk 4 interfaces with the hub 5 which reach the value of +137.0 MPs; the greatest calculation equivalent stresses according to Richard Edler von Mises (to the IV-th, power strength theory) reach the value 193.0 MPs and arise on an inner surface of a disk 4 in the place 7 where the curved disk 4 interfaces with the hub 5.

At movement of a wheel on the curved portions of a way the lateral stress operating in the direction inside of a wheel pair, in combination with remaining vertical stress causes the bending moment in the disk 4 rising from a rim of 1 to a wheel hub 5 which, in turn, causes the greatest squeezing stresses on an inner surface of a disk 4 in the place 7 where the curved disk 4 interfaces with the hub 5 which reach the value of 286.7 MPs, and the greatest stretching stresses on an outward surface of a disk 4 in the place 7 where the curved disk 4 interfaces with the hub 5 which reach the value of +251.2 MPs; the greatest calculation equivalent stresses according to Richard Edler von Mises reach the value 297.1 MPs and arise on an inner surface of a disk 4 in the place 7 where the curved disk 4 interfaces with the hub 5.

At movement of a wheel on railroad switches and crosses of the ways the lateral stress operating in the direction outward of a wheel pair, in combination with vertical stress causes the bending moment in the disk 4.

The bending moment rises from a rim 1 to a hub 5 of a wheel and causes the arising the squeezing stresses on an outward surface of a disk 4 in the place 6 where the curved disk 4 interfaces with the rim 1. The squeezing stresses reach the value of 238.2 MPa.

The greatest stretching stresses arise on an inner surface of a disk 4 in the place 6 where the curved disk 4 interfaces with the rim 1 and reach the value of 158.7 Mpa.

The greatest calculation equivalent stresses according to Richard Edler von Mises arise on the outward surface of a disk 4 in the place 6 where the curved disk 4 interfaces with the rim 1and reach the value 214.8 MPa.

The maximum calculation range of the dynamic (amplitude) stresses equals to the doubled dynamic (amplitude) stresses from enclosed to the wheel cyclic stresses and makes 314.9 MPa that doesn't exceed the limit value 360 MPa (that corresponds to the standards EN 13979 1 and UIC 510 5).

The results of exploration show the calculation stresses in a wheel disk 4 in the place 6 where the curved disk 4 interfaces with the hub 5 and in the place 7 where the curved disk 4 interfaces with the rim 1 don't exceed the critical value of 820 MPa (a limit of fluidity of a material of a wheel) or the limit value 355 MPa (a conditional limit of proportionality of a material of a wheel).

The above data testify of possibility of industrial application of the applied solid - rolled railway wheel possessing the increased service life cycle and providing the decreasing of intensity of wear of a railway track.

The solid - rolled railway wheel can be produced in the conditions of the industrial production and may be widely used in the railway vehicles with the rail-engaging elements.

### List of references

1) rim
2) flange
3) tread
4) curved disk
5) hub
6) the place where the curved disk interfaces with the rim
7) the place where the curved disk interfaces with the hub

## Claims

1. A solid - rolled railway wheel comprising a rim (1) with a flange (2) and a tread (3), a curved disk (4) having an undulatory S shape and being formed by the radii of curvature (arcs) of the radii (R₁) and (R₂) and a hub (5), wherein the place (6) where the curved disk (4) interfaces with the rim (1) and the place (7) where the curved disk (4) interfaces with the hub (5) are formed by the radii of curvature (arcs) of the radii (R₃, R₄) and (R₅, R₆) and a line (AB) represents the centre line of the radial section of the curved disk (4), wherein point (A) is situated at the place (6) where the curved disk (4) interfaces with the rim (1), and point (B) is situated at the place (7) where the curved disk (4) interfaces with the hub (5), and points (A) and (B) of the centre line (AB) of the curved disk (4) are situated on opposite sides of the median plane of the waves (O-O) which is perpendicular to the axis (X-X) of rotation, intersects the rim (1) at the tread (3) and intersects the center line (AB) of the curved disk (4) at bend point (Y), wherein the first point (A) and the flange (2) of the rim (1) are situated on the same side of the median plane of the waves (0-0), **characterized in that** the curved disk (4) is designed so that relationship between the distance (H₂) from the second point (B) to the median plane of the waves (0-0) and the distance (H₁) from the first point (A) to the median plane of the waves (0-0) is 0.60-0.99, and the relationship between the radius (R₁) of the portion (AY) of the center line (AB) of the curved disk (4) and the radius (R₂) of the portion (BY) of the center line (AB) of the curved disk (4) is 1.01-1.67.
